# EUROPÄISCHE PATENTANMELDUNG

(11) **EP 2 006 778 A1**
(43) Veröffentlichungstag der Anmeldung: **24.12.2008**
(21) Anmeldenummer: 07011864.1
(22) Anmeldetag: 18.06.2007
(51) Int. Cl.: G06F 17/30, G06F 3/048

(54) **Navigationssystem für eine Internet-Website**

(71) Anmelder: La Vecchia, Nunzio, Dr., 6612 Ascona (CH)
(72) Erfinder: La Vecchia, Nunzio, Dr., 6612 Ascona (CH)
(74) Vertreter: Luchs, Willi

(57) **Zusammenfassung**

Ein Navigationssystem für eine Internet-Website ist mit wenigstens einer Homepage (12) und mehreren Webseiten (20, 30) aufgebaut. Die Webseiten sind aus mehreren übereinander angeordneten Modulen (21a, 22a, 23a, 31a, 32a, 33a) gebildet. Diese Module (21a, 22a, 23a, 31a, 32a, 33a) weisen ebenso mehrheitlich mindestens je ein Navigationselement (17, 18, 19) auf. Durch diese Navigationselemente (17, 18, 19) kann ausgehend von diesem jeweils einen Modul (21a, 22a, 23a, 31a, 32a, 33a) ein nächstes Modul (31 b, 31 c, 32b, 32c, 33b, 33c) veranschaulicht werden. Damit kann auf sehr komfortable und spezielle Weise innerhalb dieser Website navigiert werden.

## Beschreibung

Die Erfindung bezieht sich auf ein Navigationssystem für eine Internet-Website, mit wenigstens einer Homepage und mehreren Webseiten, wobei zumindest die Webseiten jeweils durch mehrere über- und/oder nebeneinander angeordnete Module aufgebaut sind, dass ausgehend von der beim Aufstarten erscheinenden Homepage auf die Webseiten durch eine entsprechende Navigation gewechselt werden kann.

Bei bekannten Internet-Websites werden für die Navigation bei einem Wechsel von der Homepage zu einer jeweiligen Webseite bzw. von einer Webseite zu einer andern hauptsächlich sogenannte Navigationsleisten verwendet. Bei solchen Navigationsleisten kann jeweils über einen Browser auf eine bestimmte Webseite weitergeschaltet werden. In der Regel ist sowohl bei der Homepage als auch bei jeder Webseite eine Navigationsleiste ersichtlich, welche durch Anklicken mittels Cursor und Maus bzw. durch eine Tastenfunktion bedient werden kann. Diese Navigationsleisten sind in der Regel im oberen Bereich als Horizontalleisten der Homepage bzw. der Webseiten oder aber auch im linken Bereich übereinander platziert.

Der vorliegenden Erfindung wurde demgegenüber die Aufgabe zugrundegelegt, ein Navigationssystem für eine Internet-Website zu schaffen, welches eine neuartige Navigation von der Homepage zu den Webseiten bzw. zwischen den Webseiten ermöglicht.

Die Aufgabe ist erfindungsgemäss dadurch gelöst, dass der Homepage und den Webseiten ein oder mehrere Navigationselemente zum Navigieren auf jeweils eine nächste Webseite oder zurück zur Homepage zugeordnet sind, und dass die vorzugsweise mehreren bei der jeweiligen Webseite angeordneten Module ebenso mehrheitlich mindestens je ein Navigationselement aufweisen, durch welches ausgehend von diesem einen Modul ein nächstes Modul veranschaulicht werden kann.

Mit diesem erfindungsgemässen Navigationssystem kann von der Homepage zu den Webseiten bzw. zwischen den einzelnen Modulen einer Webseite sehr einfach gewechselt werden. Es hat sich in überraschender Weise herausgestellt, dass sich dieses neuartige Browsen für einen Benutzer als sehr übersichtlich erweist.

Ein Ausführungsbeispiel der Erfindung sowie weitere Vorteile derselben sind nachfolgend anhand der Zeichnung näher erläutert. Es zeigt:
- Fig.1: ein Blockschema eines Aufbaus einer erfindungsgemässen Website mit einer Homepage und mehreren Webseiten,
- Fig.2: ein Blockschema einer Webseite mit mehreren Modulen der erfindungsgemässen Website nach Fig. 1, und
- Fig.3: eine schematische Darstellung eines Bildschirmes mit einer erscheinenden Webseite mit mehreren Modulen der Website nach Fig. 1.

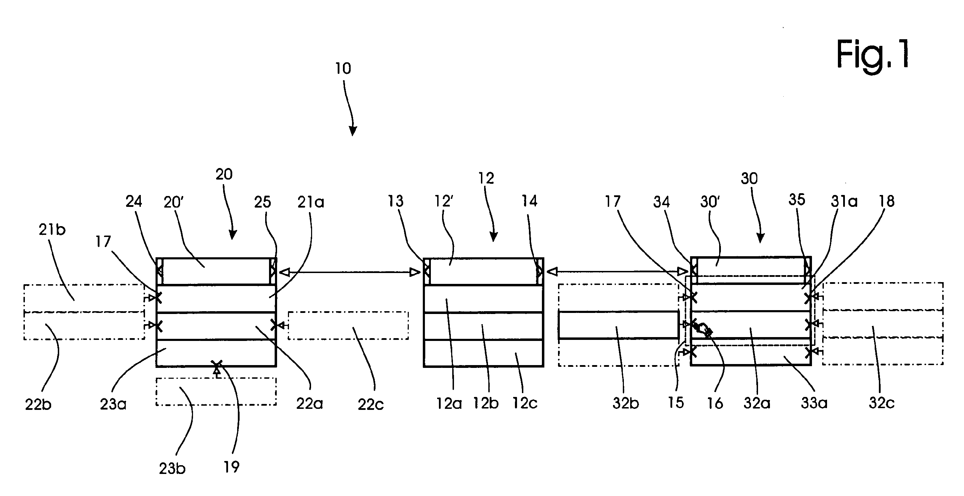

Fig.1 zeigt ein Blockschema einer Website 10, bei der die möglichen durch einen Browser erzeugbaren Darstellungen veranschaulicht sind. Eine solche Website 10 ist an sich auf herkömmliche Weise aufgebaut und programmiert. Sie kann mit den aktuell zur Verfügung stehenden technischen Hilfsmitteln erstellt sein. Es ist daher nachfolgend nicht auf Einzelheiten der Programmierung und der Erstellung einer solchen Website 10 eingegangen.

Eine solche Website 10 kann ebenfalls in bekannter Weise bei einem Server gespeichert und unter www...... im Internet aufgerufen werden. Sie kann für irgendwelche Internetauftritte von Firmen, Personen, Sachgebieten etc. vorgesehen sein.

Dieser Website 10 sind eine Homepage 12 und von dieser ausgehende Webseiten 20, 30 zugeordnet. Die Anzahl der Webseiten ist selbstverständlich unbeschränkt, vorliegend sind zwei von diesen dargestellt. Auch die Anzahl der Module bei der Homepage bzw. bei den Webseiten kann beliebig variiert werden. Ausserdem sind nachfolgend im Detail erläuterte Navigationsmittel für das Browsen vorhanden.

Erfindungsgemäss sind der Homepage 12 und den Webseiten 20, 30 ein oder mehrere Navigationselemente 13, 14, 24, 25, 34, 35 zum Navigieren auf jeweils eine nächste Webseite oder zurück zur Homepage zugeordnet. Die vorzugsweise mehreren bei einer Webseite 20, 30 angeordneten Module 21a, 22a, 23a bzw. 31a, 32a, 33a weisen mehrheitlich mindestens je ein Navigationselement 17, 18 auf, durch welches ausgehend von diesem einzelnen Modul 21a, 22a, 23a bzw. 31a, 32a, 33a ein nächstes Modul 32b, 32c veranschaulicht werden kann. Die Navigationselemente 17, 18 sind hierbei als Pfeile ausgebildet, welche durch Anklicken oder durch eine Tastenfunktion betätigbar sind.

Bei der Webseite 20 ist das eine Modul 21a mit nur einem Navigationselement 17 versehen. Es wird damit nur auf eine Seite ein Einschalten eines andern Moduls 21 b ermöglicht. Beim untersten Modul 23a ist das Navigationselement 19 auf der unteren Seite desselben platziert, womit ein Modul 23b von unten nach oben anstelle des Moduls 23a tritt. Bei dem mittleren Modul 22a sind links und rechts Navigationselemente vorhanden, so dass Module 22b, 22c sichtbar gemacht werden können. Es könnten selbstverständlich auch eine Vielzahl von Modulen, zum Beispiel 22a bis 22n vorgesehen sein. So könnte nach dem Sichtbarmachen des Moduls 22c ein weiteres nicht gezeigtes Modul (22d) visualisiert werden.

Das oberste Modul 12' der Homepage 12 wie auch die obersten Module 20', 30' der Webseiten 20, 30 sind vorteilhaft jeweils als eine Art Titelleiste ausgebildet, dagegen die darunter übereinander angeordneten Module zweckmässigerweise zu einem bestimmten Thema gemäss der Titelleiste Bezug nehmen.

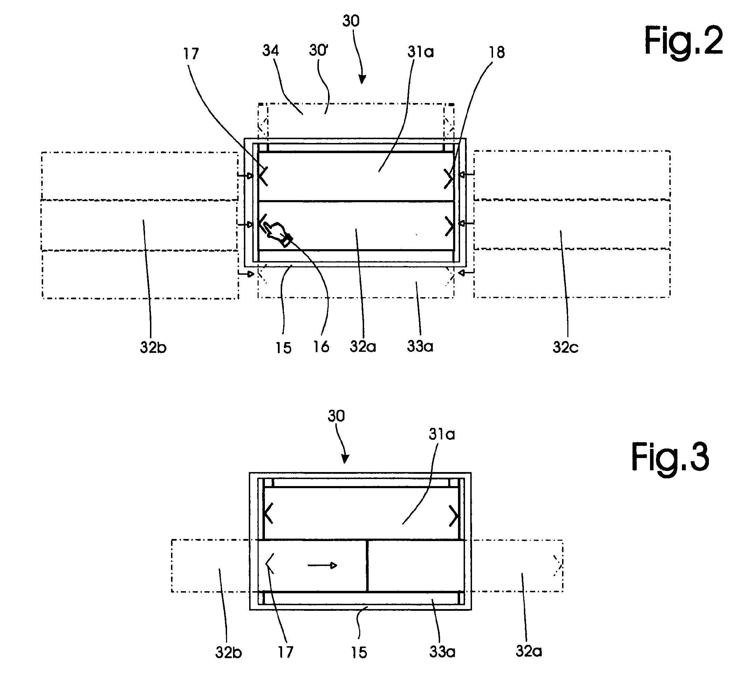

Wie dies auch aus Fig. 2 und Fig. 3 hervorgeht, ist bei der Webseite 30 ferner ein Bildschirm 15 angedeutet, auf dem annähernd zwei solcher Module 31a, 32a für einen Benutzer ersichtlich sind. Es ist ausserdem ein Cursor 16 veranschaulicht, mittels dem auf das Navigationselement bei dem Modul 32 beispielhaft angeklickt werden kann, wodurch anstelle des Moduls 32a das Modul 32b auf dem Bildschirm 15 ersichtlich wird. Die einzelnen Module bei der Homepage 12 und den Webseiten 20, 30 werden durch Scrollen oder dergleichen auf dem Bildschirm 15 sichtbar gemacht, da bei einem Bildschirm mit normaler Grösse nur jeweils annähernd zwei Module ersichtlich sein sollen.

Bei den Modulen kann auch ein Looping vorgesehen sein, durch welches bei einem Anklicken des einen Navigationselementes 17, 18 ein Modul 32a, 32b, 32c nach dem andern auf dem Bildschirm 15 erscheint, bis wieder das erste Modul 32a auftritt.

Die Homepage 12 als auch die Webseiten 20, 30 sowie deren Module können aus statischen und/oder dynamischen Darstellungen aufgebaut sein, d.h. aus Texten und/oder Bildern oder aus Filmsequenzen oder aus Bildfolgen, was nicht näher veranschaulicht ist.

Vorteilhaft sind diese Webseiten und mit ihr die Module bei einem Bildwechsel von der einen zur nächsten Webseite bzw. vom einen zum nächsten Modul so erstellt, dass der Wechsel in Richtung des Pfeils wie durch ein Nachschieben der einen Webseite bzw. des einen Moduls zum nächsten erfolgt, ohne dass die eine Webseite für einen kurzen Moment verschwindet und dann die nächste erscheint. In Fig. 3 ist ein solcher Wechsel angedeutet, bei dem nach dem Anklicken des Pfeils 17 das Modul 32a einem Benutzer so erscheint, als würde dieses horizontal in Pfeilrichtung verschoben und das nächste Modul 32b unmittelbar an dieses folgend nachgeschoben wird. Die beiden ober- und unterhalb des Moduls 32b gleichzeitig auf dem Bildschirm 15 visualisierten Module 31a, 33a dagegen verbleiben unverändert sichtbar.

Bei einem Wechsel von der einen Webseite 20, 30 zur nächsten werden alle auf dem Bildschirm 15 visualisierten Module, zum Beispiel die Module 31a, 32a, 33a gemeinsam nach rechts oder links verschoben und es erscheint eine Verschiebebewegung der Module von der einen zu der nächsten Webseite 30, 20.

Die Module 12a, 12b, 12c der Homepage sind im Ausführungsbeispiel nicht mit Navigationselementen versehen. Vorteilhaft wird bei diesen die in den Webseiten 20, 30 behandelten Themen als Zusammenfassung oder als Titel präsentiert. Selbstverständlich könnten aber auch bei der Homepage bereits Navigationselemente für das Sichtbarmachen von weiteren Modulen wie bei den Webseiten vorgesehen sein.

Die Erfindung ist mit den oben erläuterten Ausführungsbeispielen ausreichend dargetan. Sie liesse sich jedoch noch in anderen Varianten darstellen. So könnte grundsätzlich bei der Homepage und gegebenenfalls auch bei den Webseiten zusätzlich eine oder mehrere Navigationsleisten für zusätzliche Funktionen, wie Darstellungen, Links oder dergleichen vorgesehen sein.

Bei einem solchen Modul könnten auch Bilder im Kleinformat enthalten sein, welche durch Anklicken vergrössert dargestellt werden könnten. Ausgehend von diesen Modulen könnten auch Links zu Suchmaschinen oder ähnlichem vorhanden sein.

## Patentansprüche

1. Navigationssystem für eine Internet-Website, mit wenigstens einer Homepage (12) und mehreren Webseiten (20, 30), wobei zumindest die Webseiten (20, 30) jeweils durch mehrere über- und/oder nebeneinander angeordnete Module (21a, 22a, 23a, 31a, 32a, 33a) gebildet sind, dass ausgehend von der beim Aufstarten erscheinenden Homepage (12) durch eine entsprechende Navigation auf die Webseiten (20, 30) gewechselt werden kann, **dadurch gekennzeichnet, dass**
der Homepage (12) und den Webseiten (20, 30) ein oder mehrere Navigationselemente (13, 14, 24, 25, 34, 35) zum Navigieren auf jeweils eine nächste Webseite (30, 20) oder zurück zur Homepage (12) zugeordnet sind, und dass die vorzugsweise mehreren bei der jeweiligen Homepage und/oder bei der jeweiligen Webseite (20, 30) angeordneten Module (21a, 22a, 23a, 31a, 32a, 33a) ebenso mehrheitlich mindestens je ein Navigationselement (17, 18, 19) aufweisen, durch welches ausgehend von diesem jeweils einen Modul (21a, 22a, 23a, 31a, 32a, 33a) ein nächstes Modul (31b, 31c, 32b, 32c, 33b, 33c) veranschaulicht werden kann.

2. Navigationssystem nach Anspruch 1, **dadurch gekennzeichnet, dass** die Navigationselemente (13, 14, 17, 18, 19) als Pfeile ersichtlich sind, welche durch Anklicken oder durch eine Tastenfunktion betätigbar sind.

3. Navigationssystem nach Anspruch 1, **dadurch gekennzeichnet, dass** die einzelnen Module bei der Homepage (12) und den Webseiten (20, 30) durch Scrollen oder dergleichen auf dem Bildschirm (15) sichtbar sind.

4. Navigationssystem nach einem der vorhergehenden Ansprüche, **dadurch gekennzeichnet, dass** bei einem Modul ein Looping vorgesehen ist, durch welches bei einem Anklicken des einen Navigationselementes (17, 18) ein Modul (32a, 32b, 32c) nach dem andern auf dem Bildschirm (15) erscheint, bis wieder das erste Modul (32a) auftritt.

5. Navigationssystem nach einem der vorhergehenden Ansprüche, **dadurch gekennzeichnet, dass** die Homepage (12) als auch die Webseiten (20, 30) sowie deren Module aus statischen und/oder dynamischen Darstellungen aufgebaut sind, d.h. aus Texten und/oder Bildern oder aus Filmsequenzen oder aus Bildfolgen.

6. Navigationssystem nach einem der vorhergehenden Ansprüche, **dadurch gekennzeichnet, dass** das oberste Modul (12') der Homepage (12) wie auch die obersten Module (20', 30') der Webseiten (20, 30) als eine Art Titelleiste ausgebildet sind.
